Europäisches Patentamt

European Patent Office

Office européen des brevets

(11) Veröffentlichungsnummer: **0 420 175 A2**

(12) **EUROPÄISCHE PATENTANMELDUNG**

(21) Anmeldenummer: 90118454.9

(22) Anmeldetag: 26.09.90

(51) Int. Cl.⁵: **B60T 13/14**, B60T 8/44, B60T 8/48

(30) Priorität: 27.09.89 DE 3932148

(43) Veröffentlichungstag der Anmeldung:
03.04.91 Patentblatt 91/14

(84) Benannte Vertragsstaaten:
**DE ES FR GB**

(71) Anmelder: **ROBERT BOSCH GMBH**
**Postfach 10 60 50**
**W-7000 Stuttgart 10(DE)**

(72) Erfinder: **Schmitt, Edgar**
**Am Wolfberg 111**
**W-7143 Vaihingen/Enz(DE)**
Erfinder: **Siegel, Heinz**
**Hohenloherstrasse 86**
**W-7000 Stuttgart 40(DE)**
Erfinder: **Huebl, Ewald**
**Breslauer Strasse 9**
**W-7141 Schwieberdingen(DE)**
Erfinder: **Mueller, Klaus, Dr. Ing.**
**Mergentheimer Weg 17**
**W-7146 Tamm(DE)**
Erfinder: **Himmelsbach, Manfred**
**Joseph Haydn Strasse 6**
**W-7730 Villingen-S.(DE)**
Erfinder: **Jordan, Martin, Dipl.-Ing.**
**Schuellerplatz 1**
**W-5400 Koblenz(DE)**

(54) **Bremskraftverstärker.**

(57) Ein Bremskraftverstärker fur eine druckmittelbetätigte, insbesondere hydraulische Bremsanlage mit ABS und ASR weist einen durch ein Bremspedal steuerbaren Servokolben und einen über eine Magnetventilanordnung bei ASR- Betrieb steuerbaren Zusatzkolben auf, die beide zur Aussteuerung eines Bremsdrucks in der Bremsanlage über eine Druckstange (29) auf den Bremskolben (11) eines Haupt- bremszylinders (10) der Bremsanlage einwirken. Zur Erzielung einer kurzen Baulänge des Bremskraftverstärkers ist der Zusatzkolben als Ringkolben (36) ausgebildet, der die Druckstange (29) koaxial umschließt, gegenüber dieser abgedichtet ist und an einem radial vorstehenden Mitnehmer (38) der Druckstange (29) zu deren Verschiebung anliegt.

Fig. 1

EP 0 420 175 A2

# BREMSKRAFTVERSTÄRKER

Stand der Technik

Die Erfindung geht aus von einem Bremskraftverstärker für eine druckmittelbetätigte, insbesondere hydraulische Bremsanlage mit Bremsschlupf-Regeleinrichtung (ABS) und Antriebsschlupf-Regeleinrichtung (ASR) in Kraftfahrzeugen der im Oberbegriff des Anspruchs 1 definierten Gattung.

Bei einem bekannten Bremskraftverstärker dieser Art (DE 36 29 776 A1) ist der Zusatzkolben für die ASR-Funktion zwischen der Druckstange und dem Bremskolben des Hauptbremszylinders der Bremsanlage in einer vom Servokolben getrennten Gehäusekammer angeordnet. In der Gehäusekammer begrenzt der Zusatzkolben einen Druckmittelraum, der über einen Gehäuseanschluß mit der aus zwei 2/2-Wegemagnetventilen bestehenden Ventilanordnung verbunden ist. Die mit dem Servokolben einstückige Druckstange liegt an der vom Druck in dem Druckmittelraum beaufschlagten Kolbenfläche des Zusatzkolbens an, der seinerseits mit einer einstückigen Kolbenstange auf dem Bremskolben im Hauptbremszylinder wirkt. Bei Betätigen des Bremspedals verschiebt der über ein vom Bremspedal geöffnetes Ventil von Druckmittel beaufschlagte Servokolben über die Druckstange den Zusatzkolben und dieser über seine Kolbenstange den Bremskolben im Hauptbremszylinder, wodurch in den Arbeitskammern des Hauptbremszylinders ein Bremsdruck aufgebaut wird, der über getrennte Bremskreise an die Radbremsen gelangt. Im ASR-Betrieb wird über das eine der beiden 2/2-Wegemagnetventile unter Speicherdruck stehendes Druckmittel in den Druckmittelraum eingesteuert, das den Zusatzkolben beaufschlagt. Bei feststehendem Servokolben verschiebt sich der Zusatzkolben, der seinerseits den Bremskolben im Hauptbremszylinder verschiebt, so daß wiederum im Hauptbremszylinder ein Bremsdruck aufgebaut wird. Von der ASR-Regeleinrichtung werden gleichzeitig die für die ABS-Regelung vorhandenen Magnetventile in den Bremskreisen zwischen Hauptbremszylinder und Radbremsen so angesteuert, daß nur dasjenige Rad, an dem ein Antriebsschlupf auftritt, das also durchdreht, mit dem Bremsdruck beaufschlagt wird.

Ein solcher Bremskraftverstärker hat wegen des Zusatzkolbens für die ASR-Funktion eine relativ große Baulänge in Axialrichtung. Der bei jeder Bremspedalbetätigung mit zu verschiebende Bremskolben, der mit einem Dichtungsring gegenüber der Gehäusekammer abgedichtet ist, bedeutet eine erhöhte Verschiebekraft für das Bremspedal. Außerdem muß zwischen dem den Servokolben steuernden Bremspedal und dem Bremskraftverstärker-Gehäuse eine Rückstellfeder vorgesehen werden, um ein Durchfallen des Bremspedals bei dessen Betätigung während des ASR-Betriebs bzw. im unmittelbaren Anschluß daran zu verhindern. Diese Rückstellfeder vergrößert zusätzlich die Baulänge des Bremskraftverstärkers und bedeutet eine erhöhte Betätigungskraft für das Bremspedal.

Vorteile der Erfindung

Der erfindungsgemäße Bremskraftverstärker mit den kennzeichnenden Merkmalen des Anspruchs 1 hat den Vorteil, daß trotz der vorhandenen ASR-Funktion des Bremskraftverstärkers dessen Baulänge nicht größer ist als die üblicher Bremskraftverstärker ohne diese ASR-Funktion. Der als Ringkolben die Druckstange umschließende Zusatzkolben benötigt keinen Bauraum in axialer Richtung. Außerdem wird der Ringkolben bei Bremspedalbetätigung nicht mitgenommen sondern in seiner unbetätigten Grundstellung belassen. Die zwischen Druckstange und Ringkolben erforderliche Dichtung ist reibungsarm und vermindert den Betätigungskomfort im normalen Bremsbetrieb nicht merklich.

Durch die in den weiteren Ansprüchen aufgeführten Maßnahmen sind vorteilhafte Weiterbildungen und Verbesserungen des im Anspruch 1 angegebenen Bremskraftverstärkers möglich.

Gemäß einer vorteilhaften Ausführungsform der Erfindung begrenzen der Ringkolben und der Servokolben einen dazwischenliegenden Druckmittelraum, der über die Ventilanordnung wechselweise mit einem gespannten Druckmittelspeicher und einem Entlastungsraum verbindbar ist. Im ASR-Betrieb erfährt damit der Servokolben eine Rückwirkkraft, die den Servokolben in seiner Grundstellung festhält, so daß Druckstange und Servokolben auseinander fahren. Durch diese Rückwirkkraft wird verhindert, daß nach schnellem Betätigen des Bremspedals direkt im Anschluß an den ASR-Betrieb kein störendes Durchfallen am Bremspedal auftritt. Auf die bekannte Rückstellfeder am Bremspedal bzw. am Servokolben kann verzichtet werden. Durch eine entsprechende Zentrierung zwischen Servokolben und Druckstange wird nach Rücknahme der ASR-Funktion und den damit verbundenen Rückstellen des Ringkolbens die Verbindung zwischen Servokolben und Druckstange wieder hergestellt.

Gemäß einer weiteren Ausführungsform der Erfindung ist die den Druckmittelraum begrenzende Kolbenfläche des Ringkolbens so bemessen, daß eine Verschiebung des Ringkolbens bis zum Auslösen eines die Antriebsräder blockierenden Bremsdrucks im Hauptbremszylinder nur einen Bruchteil des im Druckmittelspeichers herrschenden Druckmitteldrucks erfordert. Der den Ringkolben beaufschlagende maximale Druckmitteldruck im Druckmittelraum ist dabei mittels eines Druckbegrenzers auf diesen Bruchteil reduziert. Der Fahrer findet damit bei Bremspedalbetätigung während des ASR-Betriebs kein starres Bremspedal, sondern ein mit erhöhter Bremskraft betätigbares Bremspedal vor. Ein Pedaldurchfallen ist zuverlässig unterbunden, und es kann auf die bekannte Rückstellfeder zwischen Bremspedal bzw. Servokolben und dem Gehäuse des Bremsverstärkers verzichtet werden.

Gemäß einer bevorzugten Ausführungsform der Erfindung begrenzt der Ringkolben einen zum Servokolben koaxialen ringförmigen Druckmittelraum im Gehäuse des Bremsverstärkers, wobei der Druckmittelraum über die Ventilanordnung wechselweise mit einem gespannten Druckmittelspeicher und einem Entlastungsraum verbindbar ist. Die Druckstange ist zweiteilig ausgeführt und an ihrem dem Servokolben zugekehrten Endabschnitt hohlzylindrisch ausgebildet. Der den zweiten Teil der Druckstange bildende Druckstößel ist im Innern des hohlzylindrischen Endabschnitts verschieblich geführt und stützt sich einerseits am Servokolben und andererseits am Grund des hohlzylindrischen Endabschnitts ab. Zwischen dem Druckstößel und der Druckstange ist eine Dämpfungsvorrichtung vorgesehen, die nur in Richtung Eintauchen des Druckstößels in den hohlzylindrischen Endabschnitt wirksam ist. Bei dieser konstruktiven Ausgestaltung des Bremsverstärkers wird der Servokolben im ASR-Betrieb nur durch Reibung und durch eine vom Speicherdruck beaufschlagte Stufe am Servokolben in der Grundstellung gehalten. Im ASR-Betrieb wirkt keine Druckmittelkraft auf den Servokolben, so daß der Fahrer bei einem möglichen Bremsvorgang während des Bremsvorgangs im ASR-Betrieb kein starres oder schwergängiges Bremspedal vorfindet. Die vorgesehene Dämpfung verhindert ein schnelles Durchfallen des Bremspedals bei Betätigung während des ASR-Betriebs oder im unmittelbaren Anschluß daran, so daß auch hier auf die bekannte Rückstellfeder zwischen Bremspedal und Bremsverstärkergehäuse verzichtet werden kann. Außerdem kann der ringförmige Druckmittelraum so gestaltet werden, daß das zum Verschieben des Ringkolbens notwendige Druckmittelvolumen klein ist, so daß der ASR-Eingriff schnell erfolgt.

Gemäß einer weiteren Ausführungsform der Erfindung ist die Dämpfungsvorrichtung von einem durchmessergrößeren Kolbenabschnitt des Druckstößels, der an der Innenwand des hohlzylindrischen Endabschnitts unter Belassung eines Drosselspalts anliegt, und einem zwischen dem Kolbenabschnitt und den Grund des hohlzylindrischen Endabschnitts eingeschlossenen Dämpfungsraum gebildet. Bei Verschieben des Servokolbens wird auch der Druckstößel verschoben, wobei sich im Dämpfungsraum ein Dämpfungspolster aus Druckmittel bildet.

Damit der ASR-Betrieb trotz der Dämpfung schnell erfolgen kann, ist gemäß einer weiteren Ausführungsform der Erfindung in die Innenwand des hohlzylindrischen Endabschnitts eine axiale Entlastungsnut eingebracht, die mit Abstand vor dem Grund des hohlzylindrischen Endabschnitts endet. Der Abstand ist so gewählt, daß der Kolbenabschnitt nur wenige Millimeter vor Aufschlagen des Druckstößels am Grund des hohlzylindrischen Endabschnitts aus der Entlastungsnut heraustritt. Über die Entlastungsnut wird bei ASR-Betrieb schnell genug Druckmittel in den vom Grund des hohlzylindrischen Endabschnitts und dem Kolbenabschnitt begrenzten Dämpfungsraum nachgesaugt und somit eine bremsende Wirkung der Dämpfungsvorrichtung auf den Ringkolben unterbunden.

Zeichnung

Die Erfindung ist anhand von in der Zeichnung dargestellten Ausführungsbeispielen in der nachfolgenden Beschreibung näher erläutert. Es zeigen:

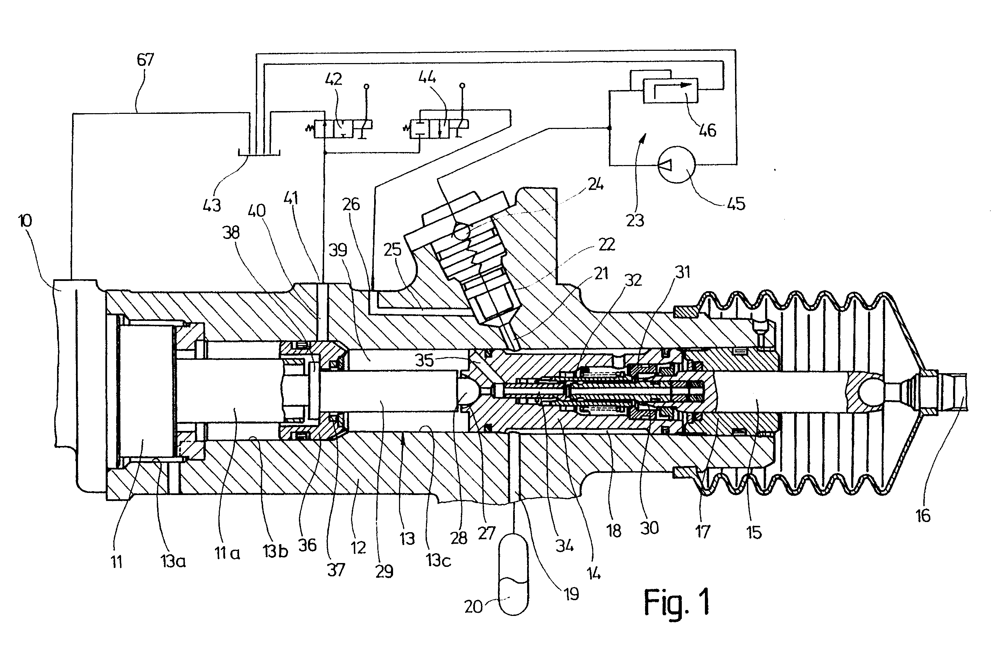

Fig. 1 bis 3 jeweils einen Längsschnitt eines Bremskraftverstärkers mit schematisch dargestellter Peripherie für eine hydraulische Bremsanlage eines Kraftfahrzeugs gemäß dreier Ausführungsbeispiele.

Beschreibung der Ausführungsbeispiele

Die in der Zeichnung im Längsschnitt zu sehenden Bremskraftverstärker sind für den Einbau in eine hydraulische Bremsanlage eines Kraftfahrzeugs vorgesehen, die mit einer Bremsschlupf-Regelenrichtung (ABS) und einer Antriebsschlupf-Regeleinrichtung (ASR) ausgerüstet ist. Der Bremskraftverstärker ist zwischen einem nicht dargestellten Bremspedal des Kraftfahrzeugs und einem in einem Hauptbremszylinder 10 der Bremsanlage geführten Bremskolben 11 angeordnet und setzt die am Bremspedal aufgebrachte Bremskraft in eine verstärkte Verschiebekraft am Bremskolben 11 im Hauptbremszylinder 10 um, so daß im Hauptbremszylinder 10 ein Bremsdruck ausgesteuert wird. An dem üblicherweise als Tandemzylinder ausgeführten Hauptbremszylinder 10 sind zwei Bremsleitungen angeschlossen, die zu Magnetventilen der ABS-Regeleinrichtung führen. Die Magnetventile sind ihrerseits mit den Radbremsen der einzelnen Räder verbunden. Aufbau und Wirkungsweise der Bremsanlage mit ABS-Regeleinrichtung sind bekannt und beispielsweise in der DE 36 29 776 A1 beschrieben, so daß auf diese ABS-Bremsfunktion nicht näher eingegangen zu werden braucht.

Im Ausführungsbeispiel der Fig. 1 weist der Bremskraftverstärker ein Gehäuse 12 mit einer längsdurchgehenden Stufenbohrung 13 auf, die sich aus den Bohrungsabschnitten 13a,13b und 13c zusammensetzt. In den durchmessergrößten Bohrungsabschnitt 13a ragt der Bremskolben 11 des stirnseitig angeflanschten Hauptbremszylinders 10 hinein, der sich mit einem im Durchmesser reduzierten hohlzylindrischen Zapfen 11a in den angrenzenden Bohrungsabschnitt 13b fortsetzt. In dem sich an dem Bohrungsabschnitt 13b anschließenden durchmesserkleinsten Bohrungsabschnitt 13c ist ein Servokolben 14 axial verschieblich geführt, der seinerseits über eine Kolbenstange 15 mit einer vom Bremspedal verschiebbaren Betätigungsstange 16 in Verbindung steht. Der Bohrungsabschnitt 13c ist stirnseitig mit einer Abschlußmuffe 17 flüssigkeitsdicht abgeschlossen, in welcher die Kolbenstange 15 verschieblich geführt ist. Der Servokolben 14 ist über einen wesentlichen Teil seiner Längserstreckung mit einer Ringnut versehen, die zusammen mit dem Bohrungsabschnitt 13c einen an beiden Stirnseiten verschlossenen Ringraum 18 bildet. Dieser Ringraum 18 ist über eine erste Bohrung 19 mit einem Druckspeicher 20 und über eine zweite Bohrung 21 mit einer Ventilaufnahmebohrung 22 im Gehäuse 12 verbunden. In die Ventilaufnahmebohrung 22 ist ein Rückschlagventil 24 eingesetzt, das mit einer Druckversorgungsvorrichtung 23 verbunden ist und eine zum Ringraum 18 hin gerichtete Durchlaßrichtung besitzt. Die Durchlaßrichtung des Rückschlagventils 24 ist in Fig. 1 symbolisch dargestellt. Von dem Grund der Ventilaufnahmebohrung 22 führt noch eine dritte Bohrung 25 im Gehäuse 12 nach außen und mündet in einem Gehäuseanschluß 26, so daß der Ringraum 18 auch unmittelbar mit diesem Gehäuseanschluß 26 in Verbindung steht. In einer an der Stirnseite des Servokolbens 14 angeordneten Zentriermulde 27 liegt eine Druckstange 29 mit einem Zentrierzapfen 28 ein, die mit dem Bremskolben 11 des Hauptbremszylinders 10 kraft-oder formschlüssig verbunden ist. Die Verbindung zwischen Druckstange 29 und Servokolben 14 erfolgt durch Kraftschluß gegen die Verschieberichtung des Servokolbens 14, wobei die Rückstellkraft von dem Bremskolben 11 oder einer nicht dargestellten Rückstellfeder aufgebracht wird.

Im Servokolben 14 ist eine Ventileinheit untergebracht, die einen mit der Kolbenstange 15 verbundenen Ventilschieber 30 aufweist, der mit einem äußeren Ventilsitz 31 und einem inneren Ventilsitz 32 zusammenwirkt. Mit Öffnen bzw. Schließen des äußeren Ventilsitzes 31 wird eine Verbindung zwischen einem Arbeitsraum 33 des Servokolbens 14 und dem Ringraum 18 hergestellt bzw. geschlossen. Mit Öffnen bzw. Schließen des inneren Ventilsitzes 32 wird eine Verbindung zwischen dem Arbeitsraum 33 und einer Entlastungsbohrung 34 im Servokolben 14 hergestellt bzw. geschlossen. Die Entlastungsbohrung 34 mündet über eine Schrägbohrung 35 an der der Druckstange 29 zugekehrten Stirnseite des Servokolbens 14.

Im mittleren Bohrungsabschnitt 13b ist ein Ringkolben 36 axial verschieblich geführt, der die Druckstange 29 koaxial umschließt und gegenüber dieser mittels eines Dichtrings 37 abgedichtet ist. Der Ringkolben 36 vermag auf der Durckstange 29 zu gleiten, wobei er in seiner unbetätigten Grundstellung an einem flanschartigen Mitnehmer 38 auf der Druckstange 29 anliegt. Bewegt sich der Ringkolben 36 in die gleiche Verschieberichtung wie der Servokolben 14 bei Bremspedalbetätigung, also in Fig. 1 nach links, so nimmt er über den Mitnehmer 38 die Druckstange 29 mit. Wird hingegen die Druckstange 29 über den Servokolben 14 verschoben, so gleitet die Druckstange 29 durch den in seiner Ruhelage beharrenden Ringkolben 36 hindurch. Der Ringkolben 36 begrenzt zusammen mit der axial gegenüberliegenden Stirnfläche des Servokolbens 14 einen Hydraulikraum 39, der mit einer im Bohrungsabschnitt 13a mündenden Radialbohrung 40 in Verbindung steht. Die Radialbohrung 40 führt im Gehäuse 12 nach außen und mündet dort in einem Gehäuseanschluß 41. Der Gehäuseanschluß 41 ist über ein stromlos offenes 2/2-Wegemagnetventil 42 mit einem Hydraulik-Sammelbehälter 43 verbunden, an dem auch der bekannte Nachlaufbehälter im Hauptbremszylinder 10 über eine Verbindungsleitung 67 angeschlossen ist, während der Gehäuseanschluß 26 über ein stromlos geschlossenes 2/2-Wegemagnetventil 44 an dem mit dem Gehäuseanschluß 41 verbundenen Eingang des 2/2-Wegemagnetventils 42 angeschlossen ist. Die Druckversorgungsvorrichtung 23 besteht in bekannter Weise aus einer motorisch angetriebenen Förderpumpe 45, deren Eingang mit dem Sammelbehälter 43 verbunden ist, und aus einem der Förderpumpe 45 parallel geschalteten Druckbegrenzer 46. Die Förderpumpe 45 spannt über das Rückschlagventil 24 und den Ringraum 18 den Druckspeicher 20 auf einen vom Druckbegrenzer 46 vorgegebenen Speicherdruck, der beispielsweise 200 bar beträgt. Die 2/2-Wegemagnetventile 42,44 werden von der hier nicht dargestellten ASR-Regeleinrichtung gesteuert, die gleichzeitig auch die für die ABS-Regelung erforderlichen, zwischen Hauptbremszylinder 10 und Radbremsen angeordneten Magnetventile zu steuern vermag.

Die Wirkungsweise des Bremskraftverstärkers ist wie folgt:

Wird das Bremspedal betätigt, so wird über die Kolbenstange 15 der Servokolben 14 in Fig. 1 nach links verschoben, wobei der Ventilschieber 30 den inneren Ventilsitz 32 schließt und den äußeren Ventilsitz 31 öffnet. Unter Speicherdruck stehendes Druckmittel strömt in den Arbeitsraum 33 und unterstützt die Verschiebebewegung des Servokolbens 14. Der Servokolben 14 betätigt die Druckstange 29 und diese den Bremskolben 11 des Hauptbremszylinders 10, so daß in den beiden Bremskreisen der Bremsanlage Bremsdruck eingesteuert wird. Wird das Bremspedal zurückgenommen, so wird über den Ventilschieber 30 der äußere Ventilsitz 31 geschlossen und der innere Ventilsitz 32 geöffnet. Unter der Rückstellwirkung des Bremskolbens 11 im Hauptbremszylinder 10 wird die Druckstange 29 und damit der Servokolben 14 in Fig. 1 nach rechts verschoben, wobei das Druckmittel aus dem Arbeitsraum 33 über die Entlastungsbohrung 34 und die Schrägbohrung 35 in den Hydraulikraum 39 fließt und von hier aus über die Radialbohrung 40 und das geöffnete Magnetventil 42 in den drucklosen Sammelbehälter 43 zurückfließen kann.

Tritt an einem Antriebsrad ein Antriebsschlupf auf, so werden von der ASR-Regeleinrichtung die beiden 2/2-Wegemagnetventile 42,44 sowie alle Magnetventile der ABS-Regeleinrichtung angesteuert. Dabei werden die Magnetventile der ABS-Regeleinrichtung so geschaltet, daß alle Radbremsen von dem Hauptbremszylinder 10 abgesperrt sind. Die beiden 2/2-Wegemagnetventile 42,44 schalten in ihre andere Schaltstellung um, in welcher der Hydraulikraum 39 durch das Magnetventil 42 zum Sammelraum 43 hin abgesperrt und über das Magnetventil 44 und den Gehäuseanschluß 26 mit dem Druckspeicher 20 verbunden ist. Damit strömt unter Speicherdruck 20 stehendes Druckmittel in den Hydraulikraum 39 ein und verschiebt den Ringkolben 36 in Fig. 1 nach links. Der Ringkolben 36 nimmt über den Mitnehmer 38 die Druckstange 29 mit und diese verschiebt den Bremskolben 11 im Hauptbremszylinder 10. In den Arbeitskammern des Hauptbremszylinders 10 wird ein Bremsdruck ausgesteuert. Nunmehr schaltet die ASR-Regeleinrichtung das der Radbremse zugeordnete Magnetventil zurück, deren zugeordnetes Rad Antriebsschlupf aufweist, also durchdreht. Das Rad wird soweit abgebremst, bis der Schlupf Null ist. Dann werden die Magnetventile 42,44 wieder zurückgesetzt, wodurch der Hydraulikraum 39 über das sperrende Magnetventil 44 vom Druckspeicher 20 getrennt und über das öffnende Magnetventil 42 wieder mit dem Sammelbehälter 43 verbunden wird. Das im Hydraulikraum 39 vorhandene Druckmittel strömt in den Sammelbehälter 43 ab, und der Ringkolben 36 wird über den Mitnehmer 38 von der vom Bremskolben 11 des Hauptbremszylinders 10 zurückgestellten Druckstange 29 in seine Ausgangslage zurückgeführt. In der Endstellung des Ringkolbens 36 zentriert sich der Zentrierzapfen 28 an der Druckstange 29 automatisch in der Zentriermulde 27 im Servokolben 14, so daß die Verbindung von Servokolben 14 und Druckstange 29 wieder hergestellt ist.

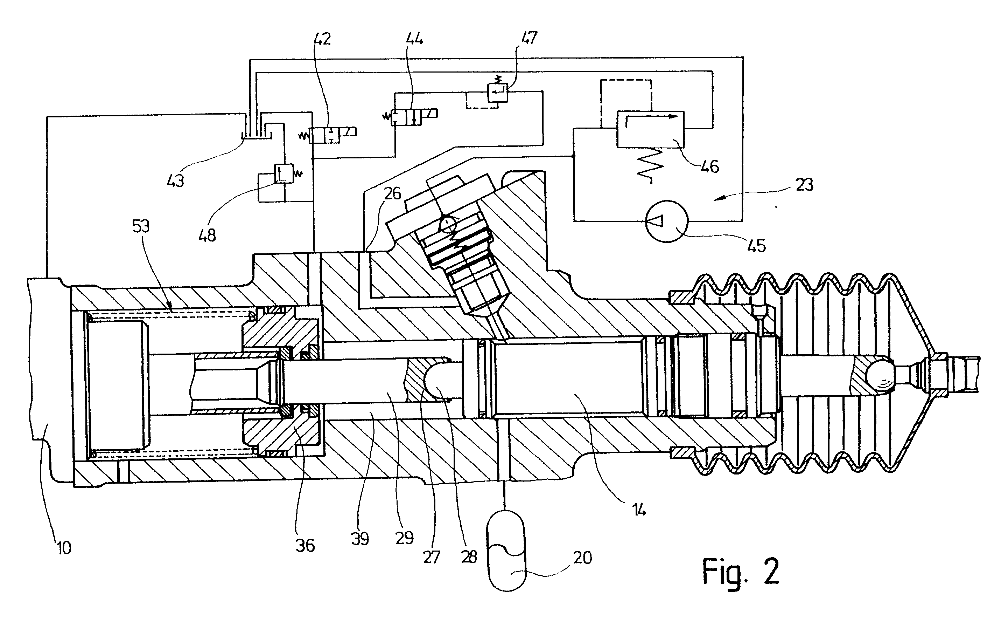

Der in Fig. 2 im Längsschnitt dargestellte Bremskraftverstärker untrscheidet sich von dem vorstehend beschriebenen, in Fig. 1 illustrierten Bremskraftverstärker dadurch, daß im Hydraulikraum 39 zwischen Servokolben 14 und Ringkolben 36 nicht Speicherdruck sondern ein auf ein Bruchteil des Speicherdrucks reduzierter Arbeitsdruck eingesteuert wird. Hierzu ist in der Verbindungsleitung zwischen dem Gehäuseanschluß 26 und dem 2/2-Wegemagnetventil 44 ein Druckbegrenzer 47 eingeschaltet, der den Speicherdruck auf Arbeitsdruck begrenzt. Bei einem Speicherdruck von 200 bar im Druckspeicher 20 ist der Druckbegrenzer 47 so eingestellt, daß der bei geöffnetem Magnetventil 44 in dem Hydraulikraum 39 sich aufbauende Arbeitsdruck maximal 30 bis 35 bar beträgt. Außerdem ist die den Hydraulikraum 39 begrenzende Kolbenfläche des Ringkolbens 36 so bemessen, daß der in den Hydraulikraum 39 eingesteuerte Arbeitsdruck von maximal 30 bis 35 bar ausreicht, den Ringkolben 36 soweit zu verschieben, daß im Hauptbremszylinder 10 ein die Antriebsräder blockierender Bremsdruck ausgesteuert werden kann. Durch diese Modifikation wird erreicht, daß während der ASR-Funktion die Rückwirkung des Arbeitsdrucks im Hydraulikraum 39 auf den Servokolben 14 wesentlich geringer ist. Der Fahrer findet damit bei Bremspedalbetätigung nicht ein starres Bremspedal vor, wie bei dem Bremskraftverstärker gemäß Fig. 1, sondern ein lediglich mit etwas erhöhter Bremskraft zu betätigendes Bremspedal.

Der in Fig. 2 zwischen dem Gehäuseanschluß 41 und dem Sammelbehälter 43 geschaltete Druckbegrenzer 48 ist erforderlich, wenn zum Druckabbau bei ASR-Betrieb, also zum Reduzieren des Arbeitsdrucks im Hydraulikraum 39, ein Rückfördern von Druckmittel durch die Förderpumpe 45 erforderlich ist, wie dies bei sog. ABS 2-Geräten der Fall ist. Der Begrenzungsdruck des Druckbegrenzers 48 ist wenig größer als der Begrenzungsdruck des Druckbegrenzers 47 eingestellt. Der Vollständigkeit halber sei angemerkt, daß bei dem Bremskraftverstärker gemäß Fig. 2 eine gesonderte Rückstellfeder 53 vorgesehen ist, die sich zwischen Ringkolben 36 und Hauptbremszylinder 10 abstützt. Bei der Zentrierung von Druckstange 29 und Servokolben 14 sind Zentriermulde 27 und Zentrierzapfen 28 gegenüber Fig. 1 vertauscht, d.h. auf dem jeweils anderen Bauelement angeordnet. Im übrigen stimmt der Bremskraftverstärker mit dem in Fig. 1 überein, so daß auf die Bezeichnung der übrigen Bauteile verzichtet worden ist.

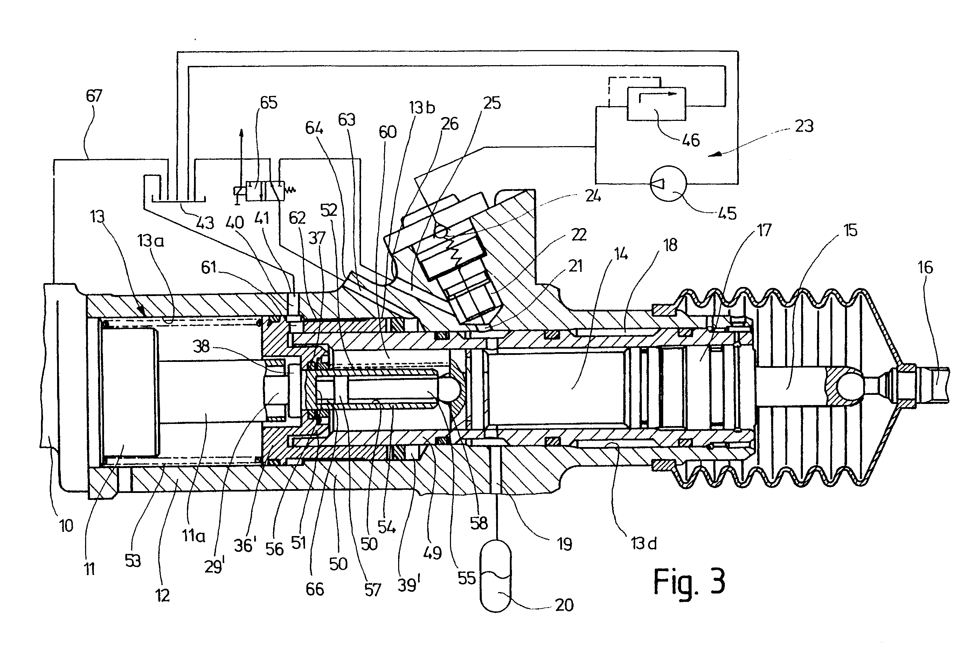

Bei dem in Fig. 3 im Längsschnitt dargestellten Bremskraftverstärker wird der Hydraulikraum 39' nicht wie bei den Druckverstärkern in Fig. 1 und 2 von dem Ringkolben 36' und dem Servokolben 14 begrenzt, sondern lediglich von dem Ringkolben 36'. Hierzu ist in dem Bohrungsabschnitt 13c eine Zwischenhülse 49 eingeschoben, in welcher der Servokolben 14 unter Ausbildung des Ringraums 18 axial verschieblich geführt ist. Die Zwischenhülse 49 ragt an ihrem dem Ringkolben 36' zugekehrten Ende mit einem Endabschnitt in den durchmessergrößeren Bohrungsabschnitt 13b hinein und bildet zusammen mit der Bohrungswand des Bohrungsabschnittes 13b den ringförmigen Hydraulikraum 39', der am Grund von der Übergangsschulter zwischen den Bohrungsabschnitten 13b und 13c abgeschlossen ist. In den stirnseitig offenen Hydraulikraum 39' ragt der topfartig ausgebildete Ringkolben 36' hinein und begrenzt diesen. Koaxial zum Topfrand 50 springt vom Ringkolben 36' ein hohlzylindrischer Stutzen 51 vor, der die Druckstange 29' umschließt und gegenüber dieser mit dem Dichtring 37 flüssigkeitsdicht abgedichtet ist. Zwischen dem Stutzen 51 und dem Servokolben 14 stützt sich eine Druckfeder 55 ab, während die vom Stutzen 51 abgekehrte Stirnseite des Ringkolbens 36' von einer Rückstellfeder 53 beaufschlagt ist, die sich am Gehäuse des angeflanschten Hauptbremszylinders 10 abstützt. Im Vergleich zu den Bremsverstärkern in Fig. 1 und 2 ist das Volumen des ringförmigenHydraulikraums 39' sehr klein, so daß das für die Verschiebung des Ringkolbens 36' erforderliche Druckmittelvolumen relativ klein ist, und somit der ASR-Eingriff relativ schnell erfolgt.

Die Druckstange 29' ist hier zweiteilig ausgebildet und weist einen hohlzylindrischen Endabschnitt 54 auf, in dessen Innern ein den zweiten Teil der Druckstange 29' bildender Druckstößel 55 geführt ist. Der Druckstößel 55 stützt sich in der Grundstellung des Ringkolbens 36' kraftschlüssig zwischen dem Grund 56 des hohlzylindrischen Endabschnitts 54 der Druckstange 29' und dem Servokolben 40' ab und ist zusätzlich durch eine Umbördelung 58 an dem Servokolben 14 gehalten. Der Druckstößel 55 trägt im Abstand vom freien Stirnende einen durchmessergrößeren Kolbenabschnitt 57, der unter Belassung eines Drosselspalts der Innenwand des hohlzylindrischen Endabschnitts 54 gegenüberliegt und mit dessen Grund 56 einen Dämpfungsraum 66 einschließt. In der Innenwand des hohlzylindrischen Endabschnitts 54 ist eine axial verlaufende Entlastungsnut 59 vorgesehen, die mit Abstand vor dem Grund 56 des hohlzylindrischen Endabschnitts 54 endet. Der Abstand ist so gewählt, daß der Kolbenabschnitt 57 des Druckstößels 55 wenige Millimeter vor dem Anschlagen des Druckstößels 55 am Grund 56 den Bereich der Entlastungsnut 59 verläßt.

Der von dem Servokolben 14 und dem Stutzen 51 des Ringkolbens 36' begrenzte Entlastungsraum 60, in dem wie in Fig. 1 und 2 die zur Entlastungsbohrung 34 im Servokolben 14 führende Schrägbohrung 35 mündet, ist über eine Durchbrechung 61 in dem Topfrand 50 des Ringkolbens 36' mit der mit dem Anschluß 41 versehenen Radialbohrung 14 im Gehäuse 12 verbunden. Damit die Verbindung während des Verschiebewegs des Ringkolbens 36' erhalten bleibt, trägt der Ringkolben 36' eine Axialnut 62, die in der Durchbrechung 61 mündet. Der Gehäuseanschluß 41 ist unmittelbar mit dem Hydraulik-Sammelbehälter 43 verbunden. Zu dem Hydraulikraum 39' führt eine vierte Bohrung 63 im Gehäuse 12, die in einem weiteren Gehäuseanschluß 64 mündet. Anstelle der beiden 2/2-Wegemagnetventile bei dem Bremskraftverstärkern in Fig. 1 und 2 ist hier ein 3/2-Wegemagnetventil 65 vorgesehen, das wiederum von der ASR-Regeleinrichtung gesteuert wird. Von den drei gesteuerten Anschlüssen des 3/2-Wegemagnetventils 65 ist der erste Ventilanschluß mit dem Gehäuseanschluß 64, der zweite Ventilanschluß mit dem Hydraulik-Sammelbehälter 43 und der dritte Ventilanschluß mit dem Gehäuseanschluß 26 verbunden. Das 3/2-Wegemagnetventil 65 ist so ausgebildet, daß es den ersten Ventilanschluß in seiner unerregten Grundstellung mit dem zweiten Ventilanschluß und in seiner erregten Schaltstellung mit dem dritten Ventilanschluß verbindet. Im übrigen entspricht der Aufbau des Bremskraftverstärkers wie zu Fig. 1 und 2 beschrieben, so daß gleiche Bauteile mit gleichen Bezugszeichen versehen sind.

Die Wirkungsweise des Bremskraftverstärkers im ASR-Betrieb ist die gleiche wie zu Fig. 1 beschrieben, mit dem Unterschied, daß während der ASR-Funktion der Servokolben 14 stirnseitig nicht mit Speicherdruck beaufschlagt ist, sondern der von ihm begrenzte Entlastungsraum 60 immer drucklos ist. Beim Verschieben des Ringkolbens 36' durch das bei geschaltetem 3/2-Wegemagnetventil 65 eingesteuerte Druckmittel wird der Servokolben 14 nur durch Reibung, die Druckfeder 52 und die den Ringraum 18 begrenzende Kolbenschulter in seiner Ausgangslage zurückgehalten. Bei am Servokolben 14 befestigtem Druckstößel 55 bewegt sich der hohlzylindrische Endabschnitt 54 der Druckstange 29' und der Druckstößel 55 relativ zueinander, wobei über die Entlastungsnut 59 Druckmittel in dem vom Kolbenabschnitt 57 und dem Grund 56 des hohlzylindrischen Endabschnitts 54 eingeschlossenen Dämpfungsraum 66 einströmt und somit die Bewegung des Ringkolbens 36' nicht gebremst wird. Betätigt der Fahrer während des ASR-Betriebs oder im unmittelbaren Anschluß daran das Bremspedal, so wird durch die von dem Kolbenabschnitt 57 beim zunehmenden Eintauchen in das Innere des hohlzylindrischen Endabschnitts 54 ausgelöste Dämpfung ein schnelles Durchfallen des Bremspedals verhindert. Wenige Millimeter vor Auftreffen des Stirnendes des Druckstößels 55 auf dem Grund 56 des hohlzylindrischen Endabschnitts 54 tritt der Kolbenabschnitt 57 aus dem Bereich der Entlastungsnut 59 aus, wodurch eine sehr starke Dämpfung bis zum Anschlag des Druckstößels 55 einsetzt.

## Ansprüche

1. Bremskraftverstärker für eine druckmittelbetätigte, insbesondere hydraulische Bremsanlage mit Bremsschlupf-Regeleinrichtung (ABS) und Antriebsschlupf-Regeleinrichtung (ASR) in Kraftfahrzeugen mit einem in einem Gehäuse axial verschieblich geführten, mit einem unter Hochdruck stehenden Druckmittel beaufschlagbaren Servokolben, dessen Druckbeaufschlagung durch ein Bremspedal steuerbar ist und der über eine Druckstange an einem in einem Hauptbremszylinder der Bremsanlage geführten Bremskolben zu dessen Verschiebung in eine Verschieberichtung angreift, die eine Bremsdruckaussteuerung im Hauptbremszylinder auslöst, und mit einem an dem Bremskolben zu dessen Verschiebung in die gleiche Verschieberichtung angreifenden Zusatzkolben, der über eine von der Antriebsschlupf-Regeleinrichtung (ASR) gesteuerte Ventilanordnung mit dem unter Hochdruck stehenden Druckmittel beaufschlagbar und druckentlastbar ist, dadurch gekennzeichnet, daß die Druckstange (29;29′) entgegen der Verschieberichtung des Servokolbens (14) kraftschlüssig an diesem anliegt und daß der Zusatzkolben als koaxialer, die Druckstange (29;29′) umschließender Ringkolben (36;36′) ausgebildet ist, der gegenüber der Druckstange (29,29′) abgedichtet ist und an einem radial vorstehenden Mitnehmer (38) der Druckstange (29;29′) zu deren Verschiebung in die gleiche Verschieberichtung, wie sie der Servokolben (14) bewirkt, anliegt.

2. Bremskraftverstärker nach Anspruch 1, dadurch gekennzeichnet, daß der Ringkolben (36) und der Servokolben (14) einen dazwischenliegenden Druckmittelraum (39) begrenzen, der über die Ventilanordnung (42,44) wechselweise mit einem gespannten Druckmittelspeicher (20) und einem Entlastungsraum (43) verbindbar ist.

3. Bremskraftverstärker nach Anspruch 1 oder 2, dadurch gekennzeichnet, daß zwischen dem Servokolben (14) und der Druckstange (39) eine Zentrierung (27,28) vorgesehen ist, die bei Rückstellung des Ringkolbens (39) nach Wegfall der Druckbeaufschlagung selbsttätig die kraftschlüssige Verbindung von Druckstange (29) und Servokolben (14) herstellt.

4. Bremskraftverstärker nach Anspruch 2 oder 3, dadurch gekennzeichnet, daß die den Druckmittelraum (39) begrenzende Kolbenfläche des Ringkolbens (36) so bemessen ist, daß eine Verschiebung des Ringkolbens (36) bis zum Auslösen eines die Antriebsräder des Kraftfahrzeugs blockierenden Bremsdrucks im Hauptbremszylinder (10) nur einen Bruchteil des in dem Druckmittelspeicher (20) herrschenden Druckmitteldrucks erfordert, und daß der dem Ringkolben (36) beaufschlagende maximale Druckmitteldruck im Druckmittelraum (39) auf diesen Bruchteil reduziert ist.

5. Bremskraftverstärker nach Anspruch 4, dadurch gekennzeichnet, daß der im Druckmittelraum (39) maximal auftretende Druckmitteldruck auf 30 bis 35 bar bei einem im Druckmittelspeicher (20) herrschenden Speicherdruck von 200 bar eingestellt ist.

6. Bremskraftverstärker nach Anspruch 4 oder 5, dadurch gekennzeichnet, daß zwischen dem Druckmittelspeicher (20) und dem Druckmittelraum (39) ein Druckbegrenzer (47) angeordnet ist.

7. Bremskraftverstärker nach Anspruch 1, dadurch gekennzeichnet, daß der Ringkolben (36′) einen zum Servokolben (14) koaxialen ringförmigen Druckmittelraum (39′) im Gehäuse (12) begrenzt, der über die Ventilanordnung (65) wechselweise mit einem gespannten Druckmittelspeicher (20) und einem Entlastungsraum (43) verbindbar ist, daß die Druckstange (29′) zweiteilig ausgeführt und an ihrem dem Servokolben (40) zugekehrten Endabschnitt (54) hohlzylindrisch ausgebildet ist, in dessen Innern ein am Grund (56) des hohlzylindrischen Endabschnitts (54) und am Servokolben (14) sich abstützender koaxialer Druckstößel (55) axial verschieblich geführt ist, und daß zwischen Druckstange (29′) und Druckstößel (55) eine Dämpfungsvorrichtung (57,66) vorgesehen ist, die nur in Richtung Eintauchen des Druckstößels (55) in den hohlzylindrischen Endabschnitt (54) der Druckstange (29′) wirksam ist.

8. Bremskraftverstärker nach Anspruch 7, dadurch gekennzeichnet, daß die Dämpfungsvorrichtung von einem durchmessergrößeren Kolbenabschnitt (57) des Druckstößels (55), der an der Innenwand des hohlzylindrischen Endabschnitts (54) unter Belassung eines Drosselspalts anliegt, und einem zwischen Kolbenabschnitt (57) und dem Grund (56) des hohlzylindrischen Endabschnitts (54) eingeschlossenen Dämpfungsraum (66) gebildet ist.

9. Bremskraftverstärker nach Anspruch 8, dadurch gekennzeichnet, daß in der Innenwand des hohlzylindrischen Endabschnitts (54) eine axiale Entlastungsnut (59) eingebracht ist, die mit Abstand vor dem Grund (56) des hohlzylindrischen Endabschnitts (54) endet, und daß der Abstand so gewählt ist, daß der Kolbenabschnitt (57) bei Anlage des Druckstößels (55) am Grund (56) des hohlzylindrischen Endabschnitts (54) um einen geringen Verschiebeweg aus dem Bereich der Entlastungsnut (59) herausgetreten ist.

10. Bremskraftverstärker nach einem der Ansprüche 7 - 9, dadurch gekennzeichnet, daß zwischen dem Servokolben (14) und dem Ringkolben (39') sich eine Druckfeder (52) abstützt.

11. Bremskraftverstärker nach einem der Ansprüche 7 - 10, dadurch gekennzeichnet, daß der Druckstößel (55) zusätzlich durch Umbördelung (58) an dem Servokolben (14) festgelegt ist.

12. Bremskraftverstärker nach einem der Ansprüche 1 - 11, dadurch gekennzeichnet, daß am Ringkolben (36;36') eine Rückstellfeder (53) zu dessen Rückstellung nach Wegfall der Druckbeaufschlagung angreift.

13. Bremskraftverstärker nach einem der Ansprüche 2 - 12, dadurch gekennzeichnet, daß die Ventilanordnung zwei 2/2-Wegemagnetventile (42,44) aufweist, von denen eines in einer Verbindungsleitung von einem mit dem Druckmittelraum (39) in Verbindung stehenden Gehäuseanschluß (41) zu dem Druckmittelspeicher (20) und das andere in einer Verbindungsleitung von dem Gehäuseanschluß (41) zu dem Entlastungsraum (43) liegt.

14. Bremskraftverstärker nach Anspruch 6 und 13, dadurch gekennzeichnet, daß der Gehäuseanschluß (41) zusätzlich über ein weiteres Druckbegrenzungsventil mit dem Entlastungsraum (43) verbunden ist, dessen Begrenzungsdruck größer ist als der Begrenzungsdruck des ersten Druckbegrenzungsventils (47).

15. Bremskraftverstärker nach einem der Ansprüche 2 - 12, dadurch gekennzeichnet, daß die Ventilanordnung ein 3/2-Wegemagnetventil (65) mit drei gesteuerten Ventilanschlüssen aufweist, von denen der erste Ventilanschluß mit einem mit dem Druckmittelraum (39') in Verbindung stehenden Gehäuseanschluß (64), der zweite Ventilanschluß mit dem Druckmittelspeicher (20) und der dritte Ventilanschluß mit dem Entlastungsraum (43) verbunden ist.

Fig. 1

EP 0 420 175 A2

Fig. 2

EP 0 420 175 A2

Fig. 3

EP 0 420 175 A2